# EUROPEAN PATENT SPECIFICATION

(11) **EP 4 053 685 B1**
(45) Date of publication and mention of the grant of the patent: **14.08.2024**
(21) Application number: 22160295.6
(22) Date of filing: 04.03.2022
(51) Int. Cl.: G06F 3/041, B60W 50/023, G06F 11/16

(54) **GROUP COMPRISING A TOUCH SCREEN DISPLAY AND A CONTROL UNIT, VEHICLE COMPRISING THE GROUP, METHOD FOR TESTING THE TOUCH SCREEN DISPLAY AND RELATED COMPUTER PROGRAM PRODUCT**
GRUPPE MIT EINER BERÜHRUNGSBILDSCHIRMANZEIGE UND EINER STEUEREINHEIT, FAHRZEUG MIT DER GRUPPE, VERFAHREN ZUM TESTEN DER BERÜHRUNGSBILDSCHIRMANZEIGE UND ENTSPRECHENDES COMPUTERPROGRAMMPRODUKT
GROUPE COMPRENANT UN ÉCRAN D'AFFICHAGE TACTILE ET UNE UNITÉ DE COMMANDE, VÉHICULE COMPRENANT LE GROUPE, PROCÉDÉ POUR TESTER L'ÉCRAN D'AFFICHAGE TACTILE ET PRODUIT PROGRAMME INFORMATIQUE CORRESPONDANT

(30) Priority: 05.03.2021 IT 202100005264
(43) Date of publication of application: 07.09.2022
(73) Proprietor: CNH Industrial Italia S.p.A., 10156 Torino (IT)
(72) Inventor: De Rosa, Francesco, 10088 Volpiano (TO) (IT)
(74) Representative: CNH Industrial IP Department

(56) References cited:
- EP-A2- 2 360 593
- US-A1- 2018 052 563
- US-A1- 2019 193 746

## Description

### TECHNICAL FIELD

The present invention relates to a group comprising a touch screen display and a control unit, to a vehicle comprising the group, to a method for testing the touch screen display and to a related computer program product. In particular, it relates to the touch screen display having a first and a second touch screen controller, with improved safety and reliability.

### BACKGROUND OF THE INVENTION

As known, touch screen displays are used in vehicles, such as heavy vehicles (e.g., rescue vehicles) or work vehicles (e.g., agricultural vehicles), to control work settings and functions of the vehicles. For example, a user driving the vehicle can provide a command through the touch screen display to change the work setting of the vehicle, to confirm or input actions (e.g., vehicle steering) or to control vehicle parameters such as the temperature in a cabin of the vehicle and pressure or temperature of mechanical components of the vehicle (e.g., valves).

In order to perform these actions in a safety way, each touch screen display is tested both during development, manufacturing and during use, through known testing techniques. Only if the touch screen display is sufficiently safe, it can be used for applications such as changing the work setting or confirming or input actions. In fact, such applications require a high level of safety, which is certified through safety standards established at national and international level.

In details, each touch screen display comprises a touch sensor (e.g., a resistive/capacitive network) and a processor (e.g., a microcontroller) coupled between them. During use, the touch sensor generates an analog signal in response to the user's touch, and the analog signal is processed by the processor to generate a digital signal indicative of touch information (e.g., of which portion of the touch screen display has been pressed by the user). Errors can occur when the analog signal is converted in the digital signal, thus leading to a malfunction of the touch screen display and to an erroneous command to the vehicle.

Currently known solutions implement safety tests on the touch screen display by using a plurality of electronic control units (ECUs) of the vehicle as shown in US2018/052563A1 and US2019/193746A1.

Nevertheless, these solutions are expensive and complex due to the presence of multiple ECUs, and do not allow to simultaneously execute the safety tests while acquiring commands from the user (i.e., the touch screen display cannot be used by the user during the execution of the safety tests, which can also last several seconds creating a relevant gap in the data acquisition).

### SUMMARY OF THE INVENTION

The aim of the present invention is to provide a group comprising a touch screen display and a control unit, a vehicle comprising the group, a method for testing the touch screen display and a related computer program product that overcome the issues mentioned above.

The aforementioned aim is reached by a group comprising a touch screen display and a control unit, a vehicle comprising the group, a method for testing the touch screen display and a related computer program product are provided, as defined in the annexed claims.

### BRIEF DESCRIPTION OF DRAWINGS

For a better understanding of the present invention, preferred embodiments thereof are now described, purely by way of non-limiting example and with reference to the attached drawings, wherein:
- Figure 1 is an exploded view of a touch screen display, according to an embodiment of the present invention;
- Figure 2 is a block diagram schematically showing a vehicle comprising the touch screen display of Figure 1, according to an embodiment of the present invention;
- Figure 3 is a block diagram schematically showing a block of the touch screen display of Figure 1, according to an embodiment of the present invention; and
- Figures 4-6 are block diagrams schematically showing a component of the block of Figure 3 in respective operative conditions of said component.

### DETAILED DESCRIPTION OF THE INVENTION

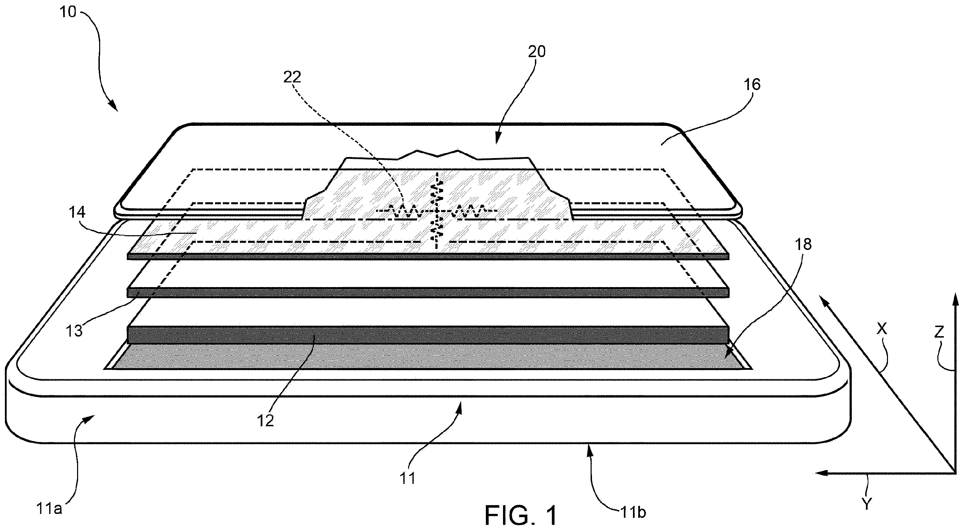

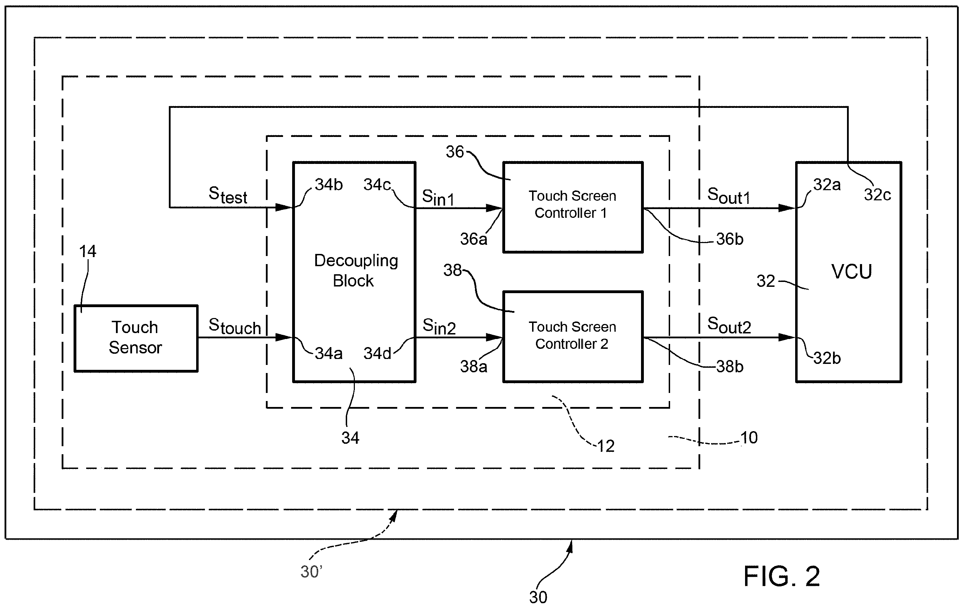

Figure 1 shows, in a triaxial Cartesian reference system defined by axis X, Y and Z, a touch screen display 10 (in the following, also called display 10) of a vehicle (shown in Figure 2 and indicated with the reference number 30), according to an embodiment of the present invention. The display 10 is operated by a user (e.g., driving or being transported by the vehicle 30) to control the vehicle 30, as better described in the following.

The display 10 comprises a frame 11, a processing group 12, a display panel 13, a touch sensor 14 and a protection element 16 (optional).

The frame 11 has an aperture 18 and defines an internal space (not shown) housing the processing group 12, the display panel 13, the touch sensor 14 and the protection element 16. In particular, the frame 11 comprises lateral walls 11a and a back wall 11b adjacent to the lateral walls 11a and opposite to the aperture 18 with respect to the frame 11.

The protection element 16 is a flexible and transparent membrane (e.g., a plastic layer), and extends in the aperture 18 forming a gasket that physically decouples the touch sensor 14, the processing group 12 and the display panel 13 from an external space (i.e., an environment external to the display 10). Therefore, the lateral walls 11a, the back wall 11b and the protection element 16 isolate the internal space from the external space. For example, the protection element 16 is coupled with the frame 11 in a fluid-tight manner, so that water, humidity or dust present in the external space cannot enter the internal space, thus preventing damages to the touch sensor 14, the processing group 12 and the display panel 13.

The processing group 12, better described with reference to Figure 2, is fixed to the frame 11 and faces the back wall 11b of the frame 11.

The processing group 12, the display panel 13, the touch sensor 14 and the protection element 16 are superimposed between each other along the Z axis; in particular, the display panel 13 and the touch sensor 14 are interposed between the protection element 16 and processing group 12, the touch sensor 14 facing the protection element 16 and the display panel 13 facing the processing group 12. Parallel to an XY plane defined by the X axis and the Y axis, a display surface 20 of the display 10 is defined as the overlapping area of the display panel 13, the touch sensor 14 and the protection element 16. The display surface 20 is laterally delimited by the frame 11 and coincides with the aperture 18. In use, the display surface 20 is the area of the display 10 where graphical information are displayed and touch commands from the user are acquired.

The display panel 13 is a known visualization device, such as an LCD panel, to display the graphical images at the display surface 20, through the touch sensor 14 and the protection element 16.

The touch sensor 14 is a known transparent and pressure-sensitive panel that acquires a touch command from the user by detecting the pressure applied at the protection element 16 (and thus to the touch sensor 14). As a non-limiting example, the touch sensor 14 comprises a resistance circuit 22 including a plurality of resistances arranged in a matrix structure. Parallel to the XY plane, the resistance circuit 22 has same extension as the display surface 20, so that pressures applied to each portion of the protection element 16 can be sensed.

Figure 2 shows the vehicle 30 comprising the display 10. In particular, the vehicle 30 is a heavy vehicle (e.g., a rescue vehicle such as a fire fighting truck or an ambulance) or a work vehicle (e.g., an earthmoving vehicle such as a dredge, or an agricultural vehicle such as a tractor).

The vehicle 30 further comprises a vehicle control unit, VCU, 32 operatively coupled to the display 10 (for example, electrically coupled through wired connection, or electromagnetically coupled through transmitting/receiving units). The VCU 32 controls the display 10 and determines if the processing group 12 is correctly working, as better described in the following.

The VCU 32 and the display 10 form a group 30' of the vehicle 30. The group 30' implements, in use, a testing method to assess the correct working of the display 10. Computer instructions executed to implement the testing method are stored in a computer-readable storage unit (not shown, such as a non-volatile memory) comprised in the VCU 32. Alternatively, the computer-readable storage unit is operatively coupled (e.g., electrically or electromagnetically) to the VCU 32 and the display 10.

In particular, as better described in the following, the VCU 32 sets the display 10 in a first, in a second or in a third operative condition. When the display 10 is set in the first operative condition, the display 10 processes twice (in parallel) each command coming from the user and the VCU 32 assesses the correct working of the display 10 based on the comparison of the results of such double processing. When the display 10 is set in the second or in the third operative condition, the display 10 processes in parallel both the command coming from the user and a known predefined signal generated by the VCU 32, and the VCU 32 assesses the correct working of the display 10 based on the comparison of such processing results.

More in details, the VCU 32 has a first input 32a, a second input 32b and an output 32c.

Optionally, the vehicle 30 further comprises a power supply unit (not shown) to power the VCU 32 and the display 10.

The processing group 12 is electrically coupled to the touch sensor 14 and operatively coupled to the VCU 32, as previously described. The processing group 12 comprises a decoupling block 34, a first touch screen controller, TSC, 36 (in the following, also called first controller 36) and a second touch screen controller, TSC, 38 (in the following, also called second controller 38).

The first and second controllers 36 and 38 are devices, circuits, modules, or the like, which are capable of manipulating data according to one or more instructions, such as, for example, processors, microprocessors, PCBs or CPUs. The first and second controllers 36 and 38 have respective inputs 36a, 38a and outputs 36b, 38b. Optionally and in a per se known way, the first and second controllers 36 and 38 comprise respective additional modules such as temperature sensors, noise detection sensors and battery-monitoring units.

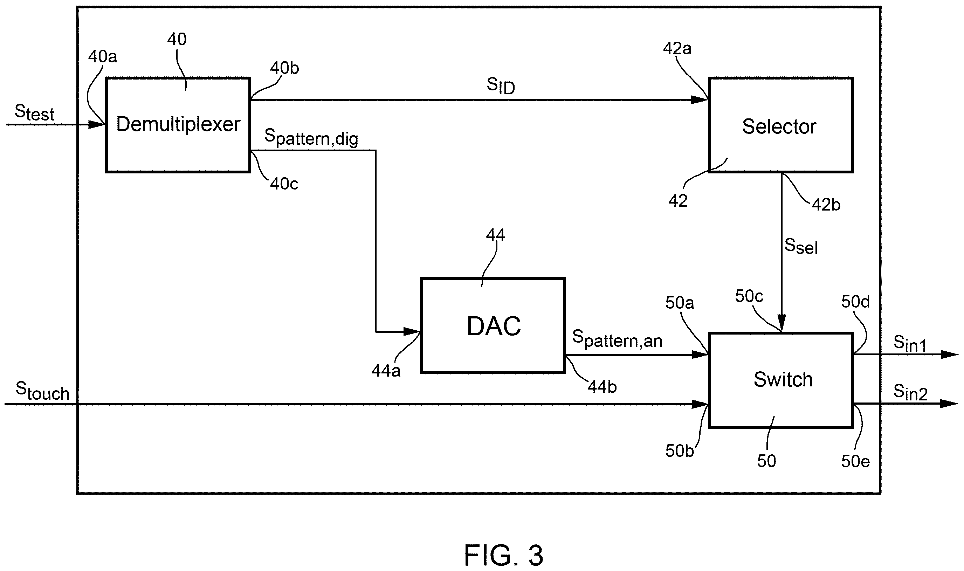

The decoupling block 34 has a first input 34a and a second input 34b, and has a first output 34c and a second output 34d. As better described with reference to Figure 3, the first input 34a of the decoupling block 34 is coupled to the touch sensor 14, the second input 34b of the decoupling block 34 is coupled to the output 32c of the VCU 32, the first output 34c of the decoupling block 34 is coupled to the input 36a of the first controller 36, and the second output 34d of the decoupling block 34 is coupled to the input 38a of the second controller 38. Moreover, the output 36b of the first controller 36 is coupled to the first input 32a of the VCU 32, and the output 38b of the second controller 38 is coupled to the second input 32b of the VCU 32.

During use, the user in the vehicle 30 provides an input command to the vehicle 30 through the display 10, by touching the display 10 at the display surface 20. In particular, the user presses a region of the protection element 16, thus creating a force acting on said region of the protection element 16 that causes, at said region, a local deflection (deformation) of the protection element 16 towards the touch sensor 14. Although only the case in which the user presses only one region of the protection element 16 at a time is here described (e.g., the pressure is applied though only one finger), it is clear that this also applies to the case in which several regions of the protection element 16 are simultaneously pressed (e.g., the pressures are applied though two or more fingers in respective and distinct regions).

The deflection of the protection element 16 is sensed by the touch sensor 14 that generates, according to per se known techniques, a touch signal S_{touch} (analog signal) indicative of the pressure of said region of the protection element 16. More in details, the resistance circuit 22 is continuously biased (for example by the power supply unit) and its electrical properties can be altered, in a per se known way, upon deflection of the protection element 16. In fact, when the user presses the region of the protection element 16, which is flexible, such pressure is transmitted to the resistance circuit 22 and causes a correspondent resistance divider, and thus the generation of the touch signal S_{touch} (e.g., a variation in the output of the touch sensor 14 with respect to a reference value detected when no pressure is applied to the protection element 16).

The touch signal S_{touch} is provided as an output of the touch sensor 14 and is received by the decoupling block 34 through the first input 34a. The decoupling block 34 further receives, through the second input 34b, a test signal Sₜₑₛₜ (digital signal) generated by the VCU 32, better described in the following.

The decoupling block 34 generates an input TSC1 signal Sᵢₙ₁ and an input TSC2 signal Sᵢₙ₂ (both analog signals), that are respectively provided to the input 36a of the first controller 36 and to the input 38a of the second controller 36.

The first controller 36 generates, based on the received input TSC1 signal Sᵢₙ₁, an output TSC1 signal Sₒᵤₜ₁ (digital signal) that is provided to the first input 32a of the VCU 32, and the second controller 38 generates, based on the received input TSC2 signal Sᵢₙ₂, an output TSC2 signal Sₒᵤₜ₂ (digital signal) that is provided to the second input 32b of the VCU 32. In particular, the first and the second controllers 36 and 38 commute, according to per se known techniques of known touch screen controllers, the analog input TSC1 and TSC2 signals Sᵢₙ₁ and Sᵢₙ₂ into the digital output TSC1 and TSC2 signals Sₒᵤₜ₁ and Sₒᵤₜ₂. Upon normal (correct) working of the controllers 36, 38 when both the controllers 36, 38 receive in input the touch signal S_{touch} (Sᵢₙ₁= Sᵢₙ₂= S_{touch}), both the output TSC1 and TSC2 signals Sₒᵤₜ₁ and Sₒᵤₜ₂ are indicative of the pressed region of the display surface 20 (e.g., of coordinates and extension of the pressed region with respect to a reference point of the display surface 20). On the other hand, upon anomalous (incorrect) working of one the controllers 36, 38 when both the controllers 36, 38 receive in input the touch signal S_{touch} (Sᵢₙ₁= Sᵢₙ₂= S_{touch}), the respective output TSC1 or TSC2 signal Sₒᵤₜ₁ or Sₒᵤₜ₂ of the faulty controller 36 or 38 is not indicative of the pressed region of the display surface 20, but reflects an erroneous processing of the respective input TSC1 or TSC2 signal Sᵢₙ₁ or Sᵢₙ₂. Therefore, a fault of the controllers 36, 38 (e.g., a fault of respective analog-to-digital converters of the controllers 36, 38, or of serial interfaces, e.g. I2c, of the controllers 36, 38 used to transmit the output TSC1 or TSC2 signal Sₒᵤₜ₁ or Sₒᵤₜ₂) could determine the detection of a false touch pressure and/or of a pressure in a wrong position of the display surface 20, thus leading to hazard at vehicle level.

As better described in the following with reference to Figures 3-6, the VCU 32 controls the decoupling block 34 through the test signal Sₜₑₛₜ, by switching the display 10 (more in details, the decoupling block 34) from the first operative condition (a default condition) to the second or the third operative condition to test the working of the controllers 36, 38. Moreover, the VCU 32 receives the output TSC1 and TSC2 signals Sₒᵤₜ₁ and Sₒᵤₜ₂ and either generates error messages (signals or notifications) or generates command signals (not shown) to control the vehicle 30. As non-limiting examples, the command signals are used to modify a work setting of the vehicle 30 (e.g., an on road/on field condition), to confirm or input actions for the vehicle 30 (e.g., to steer the vehicle 30, to actuate a PTO of the vehicle 30, etc.) or to control vehicle parameters such speed limitation of the vehicle 30 or a speed of the PTO.

Figure 3 shows in details the structure of the decoupling block 34.

The decoupling block 34 comprises a demultiplexer 40, a selector 42 (optional), a digital-to-analog converter, DAC, 44 and a switch 50. The demultiplexer 40 has an input 40a coinciding with the second input 34b of the decoupling block 34 (and thus coupled to the output 32c of the VCU 32), a first output 40b and a second output 40c. The selector 42 has an input 42a coupled to the first output 40b of the demultiplexer 40, and an output 42b. The DAC 44 has an input 44a coupled to the second output 40c of the demultiplexer 40, and an output 44b. The switch 50 has a first input 50a coupled to the output 44b of the DAC 44, a second input 50b coinciding with the first input 34a of the decoupling block 34 (and thus coupled to the touch sensor 14), a third input 50c coupled to the output 42b of the selector 42, a first output 50d coinciding with the first output 34c of the decoupling block 34 (and thus coupled to the input 36a of the first controller 36), and a second output 50e coinciding with the second output 34d of the decoupling block 34 (and thus coupled to the input 38a of the second controller 38).

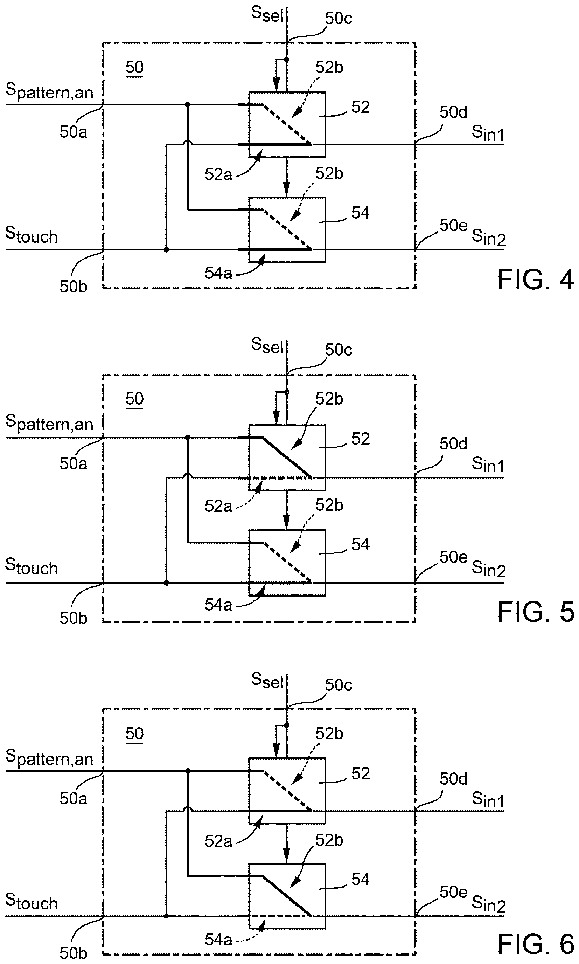

More in details, as shown in Figures 4-6, the switch 50 comprises a first switching element 52 and a second switching element 54. Each switching element 52, 54 can switch from a respective first position 52a, 54a to respective a second position 52b, 54b and vice versa. When the first switching element 52 is set in the first position 52a, the first output 50d of the switch 50 is coupled to the second input 50b of the switch 50; when the first switching element 52 is set in the second position 52b, the first output 50d of the switch 50 is coupled to the first input 50a of the switch 50; when the second switching element 54 is set in the first position 54a, the second output 50e of the switch 50 is coupled to the second input 50b of the switch 50; and when the second switching element 54 is set in the second position 54b, the second output 50e of the switch 50 is coupled to the first input 50a of the switch 50.

With reference to Figure 3, during use of the display 10, the demultiplexer 40 receives the test signal Sₜₑₛₜ from the VCU 32 when the latter generates it, as better described in the following. When the demultiplexer 40 receives the test signal Sₜₑₛₜ, the demultiplexer 40 extracts a first part of the test signal Sₜₑₛₜ (called identification signal S_{ID}) and a second part of the test signal Sₜₑₛₜ (called digital pattern signal S_{pattern,dig}), both digital signals. The digital pattern signal S_{pattern,dig} is indicative of a pattern (i.e., the predefined signal known to the VCU 32) to be processed by the first or the second controller 36, 38. The identification signal S_{ID} is indicative of which controller 36, 38 must receive and process said pattern. Therefore, the test signal Sₜₑₛₜ comprises a first information on the controller 36, 38 to be tested, and a second information on how to test the controller 36, 38 to be tested.

The identification signal S_{ID} is received by the selector 42 that generates a corresponding selection signal Sₛₑₗ (analog signal) to command the switch 50 and choose which controller 36, 38 is to be tested. In details, if the selection signal Sₛₑₗ has a first value (e.g., is equal to 0), the first controller 36 is to be tested (i.e., the second operative condition of the display 10); if the selection signal Sₛₑₗ has a second value (e.g., is equal to 1), the second controller 38 is to be tested (i.e., the third operative condition of the display 10). On the other hand, if no selection signal Sₛₑₗ is generated (because the VCU 32 has not generated the test signal Sₜₑₛₜ), none of the controllers 36, 38 is singularly to be tested, but only in comparison between them (i.e., the first operative condition of the display 10).

The digital pattern signal S_{pattern,dig} is received by the DAC 44 and converted into an analog pattern signal S_{pattern,an} (analog signal) that is received by the switch 50 through the first input 50a of the latter.

The switch 50 further receives the touch signal S_{touch} through the second input 50b, and the selection signal Sₛₑₗ through the third input 50c, and outputs the input TSC1 signal Sᵢₙ₁ through the first output 50d and the input TSC2 signal Sᵢₙ₂ through the second output 50e. In details, the selection signal Sₛₑₗ is used to command the switching elements 52 and 54, thus setting the decoupling block 34 from the first operative condition to either the second or the third operative condition.

Figure 4 shows the switching elements 52 and 54 in the first operative condition of the decoupling block 34. The first operative condition is a default operative condition of the decoupling block 34. Therefore, unless the selection signal Sₛₑₗ is received in order to set the decoupling block 34 in a different operative condition (i.e., the second or the third one), the decoupling block 34 is in the first operative condition. For example, upon receiving the selection signal Sₛₑₗ, the decoupling block 34 passes from the first operative condition to the second or the third operative condition and, after a predetermined period (e.g., tens of µm) has elapsed from such switch in operative condition, the decoupling block 34 is set again into the first operative condition.

In details, in the first operative condition the selection signal Sₛₑₗ is not received (i.e., none of the controllers 36, 38 has to be singularly tested): the first switching element 52 is in the first position 52a and the second switching element 54 is in the first position 54a. Therefore, both the input TSC1 signal Sᵢₙ₁ and the input TSC2 signal Sᵢₙ₂ are equal to the touch signal S_{touch}. The controllers 52, 54 thus receive the same input and, upon correct working of both of the controllers 52, 54, generate the same output.

In the first operative condition of the display 10, the VCU 32 compares between them the output TSC1 signal Sₒᵤₜ₁ and the output TSC2 signal Sₒᵤₜ₂ and, based on a first relationship between the output TSC1 signal Sₒᵤₜ₁ and the output TSC2 signal Sₒᵤₜ₂, either generates a first error message (not shown, indicative of the malfunctioning of one of the controllers 36, 38) if the first relationship is not met, or controls the vehicle 30 based on the information comprised in either one of (or both) the output TSC1 and TSC2 signals Sₒᵤₜ₁, Sₒᵤₜ₂ if the first relationship is met. In particular, if the output TSC1 and TSC2 signals Sₒᵤₜ₁, Sₒᵤₜ₂ have respective values that are different from each other, the first error message is generated; if the values of the output TSC1 and TSC2 signals Sₒᵤₜ₁, Sₒᵤₜ₂ are equal between them, a first command signal is generated to control the vehicle 30. Alternatively, the first error message is generated if a first difference (e.g., a first Euclidean distance) between the output TSC1 and TSC2 signals Sₒᵤₜ₁, Sₒᵤₜ₂ is greater than a first threshold difference (e.g., equal to about 2% of either one of the output TSC1 and TSC2 signals Sₒᵤₜ₁, Sₒᵤₜ₂, or of a mean of such values) and the first command signal is generated if the first difference is lower than, or equal to, the first threshold difference.

In case the first error message is generated, the VCU 32 discards the information of the output TSC1 and TSC2 signals Sₒᵤₜ₁, Sₒᵤₜ₂ and no control is performed over the vehicle 30 based on the received touch signal S_{touch}. Alternatively, the VCU 32 generates the first command signal to control the vehicle 30 either based on a predefined reference signal (e.g., pre-stored information in case of malfunctioning of one of the controllers 36, 38) or based on the most reliable signal among the output TSC1 and TSC2 signals Sₒᵤₜ₁, Sₒᵤₜ₂. The most reliable signal among the output TSC1 and TSC2 signals Sₒᵤₜ₁, Sₒᵤₜ₂ is chosen by the VCU 32 according to per se known techniques and criteria depending on the specific application and use of the display 10. Non-limiting examples of this choice could be: in case of discrepancies of information from the output TSC1 and TSC2 signals Sₒᵤₜ₁, Sₒᵤₜ₂ related to air conditioning, the latter is always turned on since it is generally considered to be preferable to have air conditioning when not requested rather than not to have it when requested; and in case of discrepancies of information from the output TSC1 and TSC2 signals Sₒᵤₜ₁, Sₒᵤₜ₂ related to calibration of suspensions of the vehicle 30, suspension calibration is always performed since it is preferable to perform a non-requested calibration rather than not to perform it when requested. Further and analogous examples relate to the switching on of headlights or radio of the vehicle 30.

With reference to Figure 5, when the selection signal Sₛₑₗ is received and has the first value (i.e., the first controller 36 has to be tested), the decoupling block 34 passes into the second operative condition: the first switching element 52 passes from the first position 52a into the second position 52b, and the second switching element 54 remains in the first position 54a. Therefore, the input TSC1 signal Sᵢₙ₁ is equal to the analog pattern signal S_{pattern,an}, and the input TSC2 signal Sᵢₙ₂ is equal to the touch signal S_{touch}.

In the second operative condition of the display 10, the VCU 32 controls the vehicle 30 based on the information comprised in the output TSC2 signal Sₒᵤₜ₂ (i.e., generates a second command signal based on the output TSC2 signal Sₒᵤₜ₂, and thus based on the touch signal S_{touch}). Moreover, the VCU 32 assesses the correct or anomalous working of the first controller 36 by comparing the output TSC1 signal Sₒᵤₜ₁ with an expected pattern signal and, if a second relationship between the output TSC1 signal Sₒᵤₜ₁ and the expected pattern signal is not met (i.e., in case of detection of anomalous working of the first controller 36), the VCU 32 generates a second error message (indicative of the incorrect working of the first controller 36). The expected pattern signal is a signal outputted by a correctly working touch screen controller receiving as input the analog pattern signal S_{pattern,an}. When generating the test signal Sₜₑₛₜ, the VCU 32 also associates to the generated test signal Sₜₑₛₜ the respective expected pattern signal. For example, the expected pattern signal is calculated by the VCU 32 based on the generated test signal Sₜₑₛₜ; alternatively, the test signal Sₜₑₛₜ and the respective expected pattern signal are chosen from a dataset of test signals Sₜₑₛₜ and respective expected pattern signals stored in the VCU 32. In particular, if the output TSC1 signal Sₒᵤₜ₁ and the expected pattern signal have respective values that are different from each other (alternatively, if a second difference between them is greater than a second threshold difference, e.g. equal to the first threshold difference), the second error message is generated; if the respective values of the output TSC1 signal Sₒᵤₜ₁ and the expected pattern signal are equal between them (alternatively, if the second difference is lower than, or equal to, the second threshold difference), the correct working of the first controller 36 is confirmed.

With reference to Figure 6, when the selection signal Sₛₑₗ is received and has the second value (i.e., the second controller 38 has to be tested), the decoupling block 34 passes into the third operative condition: the second switching element 54 passes from the first position 54a into the second position 54b, and the first switching element 52 remains in the first position 52a. Therefore, the input TSC2 signal Sᵢₙ₂ is equal to the analog pattern signal S_{pattern,an}, and the input TSC1 signal Sᵢₙ₁ is equal to the touch signal S_{touch}.

In the third operative condition of the display 10, the VCU 32 controls the vehicle 30 based on the information comprised in the output TSC1 signal Sₒᵤₜ₁ (i.e., generates a third command signal based on the output TSC1 signal Sₒᵤₜ₁, and thus based on the touch signal S_{touch}). Moreover, the VCU 32 assesses the correct or anomalous working of the second controller 38 by comparing the output TSC2 signal Sₒᵤₜ₂ with the expected pattern signal associated with the received test signal Sₜₑₛₜ and, if a third relationship between the output TSC2 signal Sₒᵤₜ₂ and the expected pattern signal is not met (i.e., in case of detection of anomalous working of the second controller 38), the VCU 32 generates a third error message (indicative of the incorrect working of the second controller 38). In particular, if the output TSC2 signal Sₒᵤₜ₂ and the expected pattern signal have respective values that are different from each other (alternatively, if a third difference between the output TSC2 signal Sₒᵤₜ₂ and the expected pattern signal is greater than a third threshold difference, e.g. equal to the second threshold difference), the third error message is generated; if the values of the output TSC2 signal Sₒᵤₜ₂ and the expected pattern signal are equal between them (alternatively, if the third difference is lower than, or equal to, the third threshold difference), the correct working of the second controller 38 is confirmed.

Optionally, in case the correct working of the first or of the second controller 36, 38 is confirmed (i.e., the second or the third relationships are met), respective confirmation messages (i.e., confirmation signals or notifications) are generated by the VCU 32.

Optionally, the generation of the second or third error message triggers a maintenance of the faulty controller 36, 38 (e.g., automatic substitution of the faulty controller 36, 38 or update in a maintenance schedule of a maintenance user).

The testing method implemented by the group 30' is performed iteratively (i.e., through one or more iterations). In particular, each iteration of the testing method comprises executing the previously described steps (i.e., from the acquisition of the touch signal S_{touch} through the touch sensor 14 to the generation of the error messages and/or of the command signals through the VCU 32).

The VCU 32 generates the test signal Sₜₑₛₜ when a test condition is confirmed.

According to an embodiment of the present invention, the test condition is verified upon reaching a first predefined number N₁ of iterations in which the decoupling block 34 is continuously set in the first operative condition. In other words, the VCU 32 periodically changes the operative condition of the decoupling block 34 in order to periodically assess the correct working of the controllers 36, 38. As a non-limiting example example, N₁ is comprised between or equal to 1 and 1000.

According to a different embodiment of the present invention, the test condition is verified upon reaching a second predefined number of iterations N₂ in which the first error message is generated. In other words, the decoupling block 34 stays in the first operative condition until the VCU 32 generates for the first time the first error message (i.e., N₂=1) or, alternatively, until the VCU 32 has generated a plurality of the first error messages (i.e., N₂>1 and for example N₂ is comprised between or equal to 2 and 30, to increase the statistical relevance of the analysis). As a consequence of the generation of the one or more first error messages, the VCU 32 sets the decoupling block 34 in the second and in the third operative condition, to verify which one of the controllers 36, 38 is not correctly working. The incorrectly working controller 36, 38 is then either permanently discarded from usage (i.e, never used again in the display 10, until substitution) or temporarily discarded from usage (i.e, not used in the display 10 for a predermined discarding period and then tested again).

For example, the VCU 32 generates the selection signal Sₛₑₗ so that the latter periodically alternates between the second value and the third value, in order to monitor the functioning of both the controllers 36, 38 multiple times, thus further increasing the statistical relevance of the analysis.

According to a different embodiment of the present invention, the VCU 32 both changes the operative condition of the decoupling block 34 after generation of the one or more first error messages and periodically changes the operative condition of the decoupling block 34 in order to periodically assess the correct working of the controllers 36, 38 (thus improving the detection of faulty controllers 36, 38).

From what has been described and illustrated previously, the advantages of the present invention are evident.

The display 10 is simple to be manufactured, cheap, affordable, scalable and reliable. In particular, the presence of only one VCU 32 allows to reduce the overall costs of the vehicle 30. In fact, the overall cost of two touch screen controllers is lower than the cost of one VCU or of one ECU.

The display 10 performs actions at a high level of safety due to the presence of both the first and the second controller 36, 38 that allow implementing the testing method previously described while keeping acquiring data through the touch sensor 14. Therefore, the acquisition of data through the display 10 is granted also simultaneously with respect to the execution of the testing method, so that no commands from the user are ignored and cannot be received.

Finally, it is clear that modifications and variations may be made to what has been described and illustrated herein, without thereby departing from the scope of the present invention, as defined in the annexed claims.

In particular, the touch sensor 14 can be based on different data acquisition technologies with respect to the resistive one. For example, the touch sensor 14 can be based, in a per se known way, on capacitive effects, surface acoustic wave effects, optical imaging, etc.

The protection element 16 can be absent from the display 10. In this case, the touch sensor 14 directly faces the external space: the touch sensor 14 is housed in the internal space of the frame 11, extends at the aperture 18 and has the display surface 20 and a further surface (not shown) that is opposite to the display surface 20 with respect to the touch sensor 14 and that faces the internal space and the display panel 13. Optionally, the touch sensor 14 forms the gasket that physically decouples (e.g., in a fluid-tight manner) the processing group 12 and the display panel 13 from the external space.

The selector 42 can be absent from the decoupling block 34. In this case, the identification signal S_{ID} is used as the selection signal Sₛₑₗ previously described, to control the switch 50.

Moreover, the display 10 can include more than two touch screen controllers. In this case, the touch screen controllers work and are coupled with the decoupling block 34 and the VCU 32 analogously to what previously described with reference to the controllers 36, 38. This allows both to increase the accuracy level in detecting faulty touch screen controllers, and to grant the correct acquisition of the commands from the user in case more than one touch screen controller is not correctly working.

## Claims

1. Group (30') comprising a touch screen display (10) and a control unit (32) operatively coupled to the touch screen display (10) and configured to generate a test signal (Sₜₑₛₜ),
the touch screen display (10) being operable by a user and comprising:
- a display surface (20);
- a touch sensor (14) configured to detect a touch, performed by the user, at a region of the display surface (20) and configured to generate a touch signal (S_{touch}) that is indicative of said touch and is an analog electric signal;
- a decoupling block (34) connected between the touch sensor (14) and the control unit (32) and configured to receive the touch signal (S_{touch}) from the touch sensor (14) and the test signal (Sₜₑₛₜ) from the control unit (32), and configured to generate a first controller input signal (Sᵢₙ₁) that is an analog electric signal and a second controller input signal (Sᵢₙ₂) that is an analog electric signal;
- a first touch screen controller (36) connected between the decoupling block (34) and the control unit (32) and configured to receive the first controller input signal (Sᵢₙ₁) from the decoupling block (34) and configured to generate a first controller output signal (Sₒᵤₜ₁) correlated to the first controller input signal (Sᵢₙ₁), the first controller output signal (Sₒᵤₜ₁) being a digital electric signal; and
- a second touch screen controller (38) connected between the decoupling block (34) and the control unit (32) and configured to receive the second controller input signal (Sᵢₙ₂) from the decoupling block (34) and configured to generate a second controller output signal (Sₒᵤₜ₂) correlated to the second controller input signal (Sᵢₙ₂), the second controller output signal (Sₒᵤₜ₂) being a digital electric signal,
wherein the control unit (32) is further configured to receive the first controller output signal (Sₒᵤₜ₁) and the second controller output signal (Sₒᵤₜ₂),
wherein the test signal (Sₜₑₛₜ) comprises a digital pattern signal (S_{pattern,dig}) and an identification signal (S_{ID}) having a first value or a second value, the digital pattern signal (S_{pattern,dig}) being indicative of a predefined signal, the first value being associated to the first touch screen controller (36) and the second value being associated to the second touch screen controller (38),
wherein the decoupling block (34) is configured to operate according to: a first operative condition in which the decoupling block (34) does not receive the test signal (Sₜₑₛₜ), a second operative condition in which the decoupling block (34) receives the test signal (Sₜₑₛₜ) and the identification signal (S_{ID}) has the first value, and a third operative condition in which the decoupling block (34) receives the test signal (Sₜₑₛₜ) and the identification signal (S_{ID}) has the second value,
wherein when the decoupling block (34) is in the first operative condition, both the first controller input signal (Sᵢₙ₁) and the second controller input signal (Sᵢₙ₂) are correlated to the touch signal (S_{touch}) and the control unit (32) generates a first error signal if the first controller output signal (Sₒᵤₜ₁) and the second controller output signal (Sₒᵤₜ₂) do not satisfy a first mutual relationship,
wherein when the decoupling block (34) is in the second operative condition, the first controller input signal (Sᵢₙ₁) is correlated to the digital pattern signal (S_{pattern,dig}), the second controller input signal (Sᵢₙ₂) is correlated to the touch signal (S_{touch}) and the control unit (32) generates a second error signal if the first controller output signal (Sₒᵤₜ₁) and an expected pattern signal associated to the test signal (Sₜₑₛₜ) do not satisfy a second mutual relationship, and
wherein when the decoupling block (34) is in the third operative condition, the second controller input signal (Sᵢₙ₂) is correlated to the digital pattern signal (S_{pattern,dig}), the first controller input signal (Sᵢₙ₁) is correlated to the touch signal (S_{touch}) and the control unit (32) generates a third error signal if the second controller output signal (Sₒᵤₜ₂) and the expected pattern signal do not satisfy a third mutual relationship.

2. Group according to claim 1, wherein the first controller output signal (Sₒᵤₜ₁) and the second controller output signal (Sₒᵤₜ₂) do not satisfy the first mutual relationship if the first controller output signal (Sₒᵤₜ₁) and the second controller output signal (Sₒᵤₜ₂) have respective values that are different from each other,
wherein the first controller output signal (Sₒᵤₜ₁) and the expected pattern signal do not satisfy the second mutual relationship if the first controller output signal (Sₒᵤₜ₁) and the expected pattern signal have respective values that are different from each other,
wherein the second controller output signal (Sₒᵤₜ₂) and the expected pattern signal do not satisfy the third mutual relationship if the second controller output signal (Sₒᵤₜ₂) and the expected pattern signal have respective values that are different from each other.

3. Group according to claim 1, wherein the first controller output signal (Sₒᵤₜ₁) and the second controller output signal (Sₒᵤₜ₂) do not satisfy the first relationship if a first difference between the first controller output signal (Sₒᵤₜ₁) and the second controller output signal (Sₒᵤₜ₂) is greater than a first threshold difference,
wherein the first controller output signal (Sₒᵤₜ₁) and the expected pattern signal do not satisfy the second mutual relationship if a second difference between the first controller output signal (Sₒᵤₜ₁) and the expected pattern signal is greater than a second threshold difference,
wherein the second controller output signal (Sₒᵤₜ₂) and the expected pattern signal do not satisfy the third mutual relationship if a third difference between the second controller output signal (Sₒᵤₜ₂) and the expected pattern signal is greater than a third threshold difference.

4. Group according to anyone of the preceding claims, wherein when the decoupling block (34) is in the first operative condition and if the first controller output signal (Sₒᵤₜ₁) and the second controller output signal (Sₒᵤₜ₂) satisfy the first mutual relationship, the control unit (32) is configured to generate a first command signal correlated to the first controller output signal (Sₒᵤₜ₁) and/or on the second controller output signal (Sₒᵤₜ₂),
wherein when the decoupling block (34) is in the second operative condition, the control unit (32) is configured to generate a second command signal correlated to the second controller output signal (Sₒᵤₜ₂), and
wherein when the decoupling block (34) is in the third operative condition, the control unit (32) is configured to generate a third command signal correlated to the first controller output signal (Sₒᵤₜ₁).

5. Group according to anyone of the preceding claims, wherein the decoupling block (34) comprises:
- a demultiplexer block (40; 40, 42) connected to the control unit (32) and configured to receive the test signal (Sₜₑₛₜ) from the control unit (32) and to extract the digital pattern signal (S_{pattern,dig}) and the identification signal (S_{ID}) from the test signal (Sₜₑₛₜ), the digital pattern signal (S_{pattern,dig}) and the identification signal (S_{ID}) being respective digital electric signals;
- a digital-to-analog converter, DAC, (44) connected to the demultiplexer block (40; 40, 42) and configured to receive the digital pattern signal (S_{pattern,dig}) from the demultiplexer block (40; 40, 42) and to convert the digital pattern signal (S_{pattern,dig}) in an analog pattern signal (S_{pattern,an}), the analog pattern signal (S_{pattern,an}) being an analog electric signal and being indicative of said predefined signal; and
- a switch block (50) connected to the DAC (44), the touch sensor (14), the demultiplexer block (40; 40, 42), the first touch screen controller (36) and the second touch screen controller (38), and configured to receive the analog pattern signal (S_{pattern,an}) from the DAC (44), the touch signal (S_{touch}) from the touch sensor (14) and the identification signal (S_{ID}) from the demultiplexer block (40; 40, 42), and to generate the first controller input signal (Sᵢₙ₁) and the second controller input signal (Sᵢₙ₂).

6. Group according to claim 5, wherein the switch block (50) comprises a first switching element (52) and a second switching element (54),
wherein the first switching element (52) is connected to the first touch screen controller (36), is in a respective first position (52a) and passes from the respective first position (52a) to a respective second position (52b) upon receiving the identification signal (S_{ID}) having the first value, the first switching element (52) connecting the touch sensor (14) to the first touch screen controller (36) when set in the respective first position (52a) and connecting the DAC (44) to the first touch screen controller (36) when set in the respective second position (52b), and
wherein the second switching element (54) is connected to the second touch screen controller (38), is in a respective first position (54a) and passes from the respective first position (54a) to a respective second position (54b) upon receiving the identification signal (S_{ID}) having the second value, the second switching element (54) connecting the touch sensor (14) to the second touch screen controller (38) when set in the respective first position (54a) and connecting the DAC (44) to the second touch screen controller (38) when set in the respective second position (54b).

7. Group according to claim 5 or 6, wherein when the decoupling block (34) is in the first operative condition, both the first controller input signal (Sᵢₙ₁) and the second controller input signal (Sᵢₙ₂) are equal to the touch signal (S_{touch}),
wherein when the decoupling block (34) is in the second operative condition, the first controller input signal (Sᵢₙ₁) is equal to the analog pattern signal (S_{pattern,an}) and the second controller input signal (Sᵢₙ₂) is equal to the touch signal (S_{touch}), and
wherein when the decoupling block (34) is in the third operative condition, the second controller input signal (Sᵢₙ₂) is equal to the analog pattern signal (S_{pattern,an}) and the first controller input signal (Sᵢₙ₁) is equal to the touch signal (S_{touch}).

8. Group according to anyone of the preceding claims, wherein the expected pattern signal is calculated by the control unit (32) based on the test signal (Sₜₑₛₜ), or is selected from a pretermined dataset stored in the control unit (32) and comprising a plurality of test signals (Sₜₑₛₜ) and the associated expected pattern signals.

9. Group according to anyone of the preceding claims, wherein the touch screen display (10) further comprises:
- a frame (11) defining an internal space of the touch screen display (10) and having an aperture (18), wherein the touch sensor (14) is housed in the internal space of the frame (11), extends at the aperture (18) and has the display surface (20) and a further surface opposite to the display surface (20) and facing the internal space;
- a display panel (13) that is housed in the internal space of the frame (11), faces the further surface of the touch sensor (14) and is configured to display graphical images at the display surface (20),
wherein the decoupling block (34), the first touch screen controller (36) and the second touch screen controller (38) are further housed in the internal space of the frame (11).

10. Group according to anyone of the preceding claims, wherein the touch sensor (14) is based on one of the following touch sensing techniques: resistive; capacitive; surface acoustic wave; optical imaging.

11. Vehicle (30) comprising a group (30') according to anyone of claims 1-10.

12. Vehicle according to claim 11, wherein the vehicle (30) is a heavy vehicle or a work vehicle.

13. Vehicle according to claim 11 or 12, wherein the control unit (32) is a vehicle control unit, VCU.

14. Vehicle according to claim 4 and anyone of claims 11-13, wherein the vehicle (30) is controlled by the group (30') through the first command signal, the second command signal and the third command signal.

15. Method for testing a touch screen display (10) operatively coupled to a control unit (32),
the touch screen display (10) being operable by a user and comprising:
- a display surface (20);
- a touch sensor (14);
- a decoupling block (34) connected between the touch sensor (14) and the control unit (32);
- a first touch screen controller (36) connected between the decoupling block (34) and the control unit (32);
- a second touch screen controller (38) connected between the decoupling block (34) and the control unit (32),
the method comprising executing at least one iteration, each iteration comprising the steps of:
- detecting, by the touch sensor (14), a touch, performed by the user, at a region of the display surface (20);
- generating, by the touch sensor (14), a touch signal (S_{touch}) that is indicative of said touch and is an analog electric signal;
- if a test condition is confirmed, generating, by the control unit (32), a test signal (Sₜₑₛₜ) comprising a digital pattern signal (S_{pattern,dig}) and an identification signal (S_{ID}) having a first value or a second value, the digital pattern signal (S_{pattern,dig}) being indicative of a predefined signal, the first value being associated to the first touch screen controller (36) and the second value being associated to the second touch screen controller (38);
- receiving, by the decoupling block (34), the touch signal (S_{touch}) from the touch sensor (14) and the test signal (Sₜₑₛₜ), if generated, from the control unit (32);
- generating, by the decoupling block (34), a first controller input signal (Sᵢₙ₁) that is an analog electric signal, and a second controller input signal (Sᵢₙ₂) that is an analog electric signal,
wherein the decoupling block (34) is configured to operate according to: a first operative condition in which the decoupling block (34) does not receive the test signal (Sₜₑₛₜ) and both the first controller input signal (Sᵢₙ₁) and the second controller input signal (Sᵢₙ₂) are correlated to the touch signal (S_{touch}) ; a second operative condition in which the decoupling block (34) receives the test signal (Sₜₑₛₜ) and the identification signal (S_{ID}) has the first value, and the first controller input signal (Sᵢₙ₁) is correlated to the digital pattern signal (S_{pattern,dig}) and the second controller input signal (Sᵢₙ₂) is correlated to the touch signal (S_{touch}) ; and a third operative condition in which the decoupling block (34) receives the test signal (Sₜₑₛₜ) and the identification signal (S_{ID}) has the second value, and the second controller input signal (Sᵢₙ₂) is correlated to the digital pattern signal (S_{pattern,dig}) and the first controller input signal (Sᵢₙ₁) is correlated to the touch signal (S_{touch}),
each iteration further comprising the steps of:
- receiving, by the first touch screen controller (36), the first controller input signal (Sᵢₙ₁) from the decoupling block (34);
- generating, by the first touch screen controller (36), a first controller output signal (Sₒᵤₜ₁) that is a digital electric signal and is correlated to the first controller input signal (Sᵢₙ₁);
- receiving, by the second touch screen controller (38), the second controller input signal (Sᵢₙ₂) from the decoupling block (34);
- generating, by the second touch screen controller (38), a second controller output signal (Sₒᵤₜ₂) that is a digital electric signal and is correlated to the second controller input signal (Sᵢₙ₂) ;
- receiving, by the control unit (32), the first controller output signal (Sₒᵤₜ₁) from the first touch screen controller (36) and the second controller output signal (Sₒᵤₜ₂) from the second touch screen controller (38); and
- when the decoupling block (34) is in the first operative condition, generating, by the control unit (32), a first error signal if the first controller output signal (Sₒᵤₜ₁) and the second controller output signal (Sₒᵤₜ₂) do not satisfy a first mutual relationship, or
when the decoupling block (34) is in the second operative condition, generating, by the control unit (32), a second error signal if the first controller output signal (Sₒᵤₜ₁) and an expected pattern signal associated to the test signal (Sₜₑₛₜ) do not satisfy a second mutual relationship, or
when the decoupling block (34) is in the third operative condition, generating, by the control unit (32), a third error signal if the second controller output signal (Sₒᵤₜ₂) and the expected pattern signal do not satisfy a third mutual relationship, and
wherein the test condition is confirmed: upon reaching a first predefined number of iterations in which the decoupling block (34) is continuously set in the first operative condition; and/or upon reaching a second predefined number of iterations in which the first error signal is generated.

16. Computer program product comprising instructions for testing a touch screen display (10) operatively coupled to a control unit (32), the touch screen display (10) being operable by a user and comprising:
- a display surface (20);
- a touch sensor (14);
- a decoupling block (34) connected between the touch sensor (14) and the control unit (32);
- a first touch screen controller (36) connected between the decoupling block (34) and the control unit (32);
- a second touch screen controller (38) connected between the decoupling block (34) and the control unit (32),
wherein the computer program product can be loaded into a computer-readable storage medium, comprised in the control unit (32) or operatively coupled to the touch screen display (10) and the control unit (32), wherein the instructions cause the touch screen display (10) and the control unit (32) to execute the steps of the method according to claim 15.

## Patentansprüche

1. Gruppe (30') mit einer Berührungsbildschirmanzeige (10) und einer Steuereinheit (32), die mit der Berührungsbildschirmanzeige (10) in Wirkverbindung steht und die dazu eingerichtet ist, ein Testsignal (Sₜₑₛₜ) zu erzeugen,
wobei die Berührungsbildschirmanzeige (10) durch einen Bediener betätigbar ist und Folgendes umfasst:
- eine Anzeigeoberfläche (20);
- einen Berührungssensor (14), der dazu eingerichtet ist, eine Berührung zu erfassen, die durch einen Bediener erfolgt, in einem Bereich der Anzeigeoberfläche (20), und der dazu eingerichtet ist, ein Berührungssignal (S_{touch}) zu erzeugen, das charakteristisch für diese Berührung ist und das ein analoges elektrisches Signal ist;
- einen Entkopplungs-Block (34), der zwischen dem Berührungssensor (14) und der Steuereinheit (32) angeschlossen ist und der dazu eingerichtet ist, das Berührungssignal (S_{touch}) von dem Berührungssensor (14) und das Testsignal (Sₜₑₛₜ) von der Steuereinheit (32) zu erhalten, und der dazu eingerichtet ist, ein erstes Steuerungs-Eingangssignal (Sᵢₙ₁) zu erzeugen, das ein analoges elektrisches Signal ist, und ein zweites Steuerungs-Eingangssignal (Sᵢₙ₂) zu erzeugen, das ein analoges elektrisches Signal ist;
- eine erste Berührungsbildschirm-Steuerung (36), die zwischen dem Entkopplungs-Block (34) und der Steuereinheit (32) angeschlossen ist und die dazu eingerichtet ist, das erste Steuerungs-Eingangssignal (Sᵢₙ₁) von dem Entkopplungs-Block (34) zu erhalten, und die dazu eingerichtet ist, ein erstes Steuerungs-Ausgangssignal (Sₒᵤₜ₁) zu erzeugen, das mit dem ersten Steuerungs-Eingangssignal (Sᵢₙ₁) korreliert, wobei das erste Steuerungs-Ausgangssignal (Sₒᵤₜ₁) ein digitales elektrisches Signal ist; und
- eine zweite Berührungsbildschirm-Steuerung (38), die zwischen dem Entkopplungs-Block (34) und der Steuereinheit (32) angeschlossen ist und die dazu eingerichtet ist, das zweite Steuerungs-Eingangssignal (Sᵢₙ₂) von dem Entkopplungs-Block (34) zu erhalten, und die dazu eingerichtet ist, ein zweites Steuerungs-Ausgangssignal (Sₒᵤₜ₂) zu erzeugen, das mit dem zweiten Steuerungs-Eingangssignal (Sᵢₙ₂) korreliert, wobei das zweite Steuerungs-Ausgangssignal (Sₒᵤₜ₂) ein digitales elektrisches Signal ist,
- wobei die Steuereinheit (32) weiterhin dazu eingerichtet ist, das erste Steuerungs-Ausgangssignal (Sₒᵤₜ₁) und das zweite Steuerungs-Ausgangssignal (Sₒᵤₜ₂) zu erhalten,
- wobei das Testsignal (Sₜₑₛₜ) ein digitales Mustersignal (S_{pattern, dig}) und ein Identifizierungssignal (S_{ID}), das einen ersten Wert oder einen zweiten Wert hat, aufweist, wobei das digitale Mustersignal (Sₚₐₜₜₑᵣₙ, _{dig}) charakteristisch ist für ein vorbestimmtes Signal, wobei der erste Wert der ersten Berührungsbildschirm-Steuerung (36) zugeordnet ist und wobei der zweite Wert der zweiten Berührungsbildschirm-Steuerung (38) zugeordnet ist,
- wobei der Entkopplungs-Block (34) dazu eingerichtet ist, gemäß Folgendem betrieben zu werden: einem ersten Betriebszustand, bei dem der Entkopplungs-Block (34) das Testsignal (Sₜₑₛₜ) nicht erhält, einem zweiten Betriebszustand, bei dem der Entkopplungs-Block (34) das Testsignal (Sₜₑₛₜ) erhält und das Identifizierungs-Signal (S_{ID}) den ersten Wert hat, und einem dritten Betriebszustand, bei dem der Entkopplungs-Block (34) das Testsignal (Sₜₑₛₜ) erhält und das Identifizierungs-Signal (S_{ID}) den zweiten Wert hat,
- wobei, wenn sich der Entkopplungs-Block (34) in dem ersten Betriebszustand befindet, sowohl das erste Steuerungs-Eingangssignal (Sᵢₙ₁) als auch das zweite Steuerungs-Eingangssignal (Sᵢₙ₂) mit dem Berührungssignal (S_{touch}) korrelieren und die Steuereinheit (32) ein erstes Fehlersignal erzeugt, wenn das erste Steuerungs-Ausgangssignal (Sₒᵤₜ₁) und das zweite Steuerungs-Ausgangssignal (Sₒᵤₜ₂) eine erste gegenseitige Beziehung nicht erfüllen,
- wobei, wenn sich der Entkopplungs-Block (34) in dem zweiten Betriebszustand befindet, das erste Steuerungs-Eingangssignal (Sᵢₙ₁) mit dem digitalen Mustersignal (S_{pattern, dig}) korreliert, das zweite Steuerungs-Eingangssignal (Sᵢₙ₂) mit dem Berührungssignal (S_{touch}) korreliert, und die Steuereinheit (32) ein zweites Fehlersignal erzeugt, wenn das erste Steuerungs-Ausgangssignal (Sₒᵤₜ₁) und ein zu erwartendes Mustersignal, das dem Testsignal (Sₜₑₛₜ) zugeordnet ist, eine zweite gegenseitige Beziehung nicht erfüllen, und
- wobei, wenn sich der Entkopplungs-Block (34) in dem dritten Betriebszustand befindet, das zweite Steuerungs-Eingangssignal (Sᵢₙ₂) mit dem digitalen Mustersignal (S_{pattern, dig}) korreliert, das erste Steuerungs-Eingangssignal (Sᵢₙ₁) mit dem Berührungssignal (S_{touch}) korreliert, und die Steuereinheit (32) ein drittes Fehlersignal erzeugt, wenn das zweite Steuerungs-Ausgangssignal (Sₒᵤₜ₂) und das zu erwartende Mustersignal eine dritte gegenseitige Beziehung nicht erfüllen.

2. Gruppe nach Anspruch 1, wobei das erste Steuerungs-Ausgangssignal (Sₒᵤₜ₁) und das zweite Steuerungs-Ausgangssignal (Sₒᵤₜ₂) die erste gegenseitige Beziehung nicht erfüllen, wenn das erste Steuerungs-Ausgangssignal (Sₒᵤₜ₁) und das zweite Steuerungs-Ausgangssignal (Sₒᵤₜ₂) jeweilige Werte haben, die voneinander verschieden sind,
wobei das erste Steuerungs-Ausgangssignal (Sₒᵤₜ₁) und das zu erwartende Mustersignal die zweite gegenseitige Beziehung nicht erfüllen, wenn das erste Steuerungs-Ausgangssignal (Sₒᵤₜ₁) und das zu erwartende Mustersignal jeweilige Werte haben, die voneinander verschieden sind,
wobei das zweite Steuerungs-Ausgangssignal (Sₒᵤₜ₂) und das zu erwartende Mustersignal die dritte gegenseitige Beziehung nicht erfüllen, wenn das zweite Steuerungs-Ausgangssignal (Sₒᵤₜ₂) und das zu erwartende Mustersignal jeweilige Werte haben, die voneinander verschieden sind.

3. Gruppe nach Anspruch 1, wobei das erste Steuerungs-Ausgangssignal (Sₒᵤₜ₁) und das zweite Steuerungs-Ausgangssignal (Sₒᵤₜ₂) die erste Beziehung nicht erfüllen, wenn eine erste Differenz zwischen dem ersten Steuerungs-Ausgangssignal (Sₒᵤₜ₁) und dem zweiten Steuerungs-Ausgangssignal (Sₒᵤₜ₂) größer als eine erste Schwellenwert-Differenz ist,
wobei das erste Steuerungs-Ausgangssignal (Sₒᵤₜ₁) und das zu erwartende Mustersignal die zweite gegenseitige Beziehung nicht erfüllen, wenn eine zweite Differenz zwischen dem ersten Steuerungs-Ausgangssignal (Sₒᵤₜ₁) und dem zu erwartenden Mustersignal größer als eine zweite Schwellenwert-Differenz ist,
wobei das zweite Steuerungs-Ausgangssignal (Sₒᵤₜ₂) und das zu erwartende Mustersignal die dritte gegenseitige Beziehung nicht erfüllen, wenn eine dritte Differenz zwischen dem zweiten Steuerungs-Ausgangssignal (Sₒᵤₜ₂) und dem zu erwartenden Mustersignal größer als eine dritte Schwellenwert-Differenz ist.

4. Gruppe nach einem der vorhergehenden Ansprüche, wobei, wenn sich der Entkopplungs-Block (34) in dem ersten Betriebszustand befindet und wenn das erste Steuerungs-Ausgangssignal (Sₒᵤₜ₁) und das zweite Steuerungs-Ausgangssignal (Sₒᵤₜ₂) die erste gegenseitige Beziehung erfüllen, die Steuereinheit (32) dazu eingerichtet ist, ein erstes Anweisungssignal zu erzeugen, das mit dem ersten Steuerungs-Ausgangssignal (Sₒᵤₜ₁) und/oder dem zweiten Steuerungs-Ausgangssignal (Sₒᵤₜ₂) korreliert,
wobei, wenn sich der Entkopplungs-Block (34) in dem zweiten Betriebszustand befindet, die Steuereinheit (32) dazu eingerichtet ist, ein zweites Anweisungssignal zu erzeugen, das mit dem zweiten Steuerungs-Ausgangssignal (Sₒᵤₜ₂) korreliert, und
wobei, wenn sich der Entkopplungs-Block (34) in dem dritten Betriebszustand befindet, die Steuereinheit (32) dazu eingerichtet ist, ein drittes Anweisungssignal zu erzeugen, das mit dem ersten Steuerungs-Ausgangssignal (Sₒᵤₜ₁) korreliert.

5. Gruppe nach einem der vorhergehenden Ansprüche, wobei der Entkopplungs-Block (34) aufweist:
- einen Demultiplexer-Block (40; 40, 42), der mit der Steuereinheit (32) verbunden ist und der dazu eingerichtet ist, das Testsignal (Sₜₑₛₜ) von der Steuereinheit (32) zu erhalten und das digitale Mustersignal (Sₚₐₜₜₑᵣₙ, _{dig}) und das Identifizierungssignal (S_{ID}) von dem Testsignal (Tₜₑₛₜ) zu extrahieren, wobei das digitale Mustersignal (S_{pattern, dig}) und das Identifizierungssignal (S_{ID}) jeweils digitale elektrische Signale sind;
- einen Digital-Analog-Wandler, DAC, (44), der mit dem Demultiplexer-Block (40; 40, 42) verbunden ist und der dazu eingerichtet ist, das digitale Mustersignal (S_{pattern, dig}) von dem Demultiplexer-Block (40; 40, 42) zu erhalten und das digitale Mustersignal (Sₚₐₜₜₑᵣₙ, _{dig}) in ein analoges Mustersignal (Sₚₐₜₜₑᵣₙ, ₐₙ) zu konvertieren, wobei das analoge Mustersignal (S_{pattern, an}) ein analoges elektrisches Signal ist und charakteristisch für das vorbestimmte Signal ist; und
- einen Schaltblock (50), der mit dem DAC (44), dem Berührungssensor (14), dem Demultiplexer-Block (40; 40, 42), der ersten Berührungsbildschirm-Steuerung (36) und der zweiten Berührungsbildschirm-Steuerung (38) verbunden ist, und der dazu eingerichtet ist, das analoge Mustersignal (S_{pattern, an}) von dem DAC (44), das Berührungssignal (S_{touch}) von dem Berührungssensor (14) und das Identifizierungssignal (S_{ID}) von dem Demultiplexer-Block (40; 40, 42) zu erhalten, und das erste Steuerungs-Eingangssignal (Sᵢₙ₁) und das zweite Steuerungs-Eingangssignal (Sᵢₙ₂) zu erzeugen.

6. Gruppe nach Anspruch 5, wobei der Schaltblock (50) ein erstes Schaltelement (52) und ein zweites Schaltelement (54) umfasst,
wobei das erste Schaltelement (52) mit der ersten Berührungsbildschirm-Steuerung (36) verbunden ist, sich in einer jeweiligen ersten Stellung (52a) befindet und sich von der jeweiligen ersten Stellung (52a) in eine jeweilige zweite Stellung (52b) nach Erhalt des Identifizierungssignals (S_{ID}), das den ersten Wert hat, bewegt, wobei das erste Schaltelement (52) den Berührungssensor (14) mit der ersten Berührungsbildschirm-Steuerung (36) verbindet, wenn er in der jeweiligen ersten Stellung (52a) angeordnet ist, und den DAC (44) mit der ersten Berührungsbildschirm-Steuerung (36) verbindet, wenn er in der jeweiligen zweiten Stellung (52b) angeordnet ist, und
wobei das zweite Schaltelement (54) mit der zweiten Berührungsbildschirm-Steuerung (38) verbunden ist, sich in einer jeweiligen ersten Stellung (54a) befindet und sich von der jeweiligen ersten Stellung (54a) in eine jeweilige zweite Stellung (54b) nach Erhalt des Identifizierungssignals (S_{ID}), das den zweiten Wert hat, bewegt, wobei das zweite Schaltelement (54) den Berührungssensor (14) mit der zweiten Berührungsbildschirm-Steuerung (38) verbindet, wenn er in der jeweiligen ersten Stellung (54a) angeordnet ist, und den DAC (44) mit der zweiten Berührungsbildschirm-Steuerung (38) verbindet, wenn er in der jeweiligen zweiten Stellung (54b) angeordnet ist.

7. Gruppe nach Anspruch 5 oder 6, wobei, wenn sich der Entkopplungs-Block (34) in dem ersten Betriebszustand befindet, sowohl das erste Steuerungs-Eingangssignal (Sᵢₙ₁) als auch das zweite Steuerungs-Eingangssignal (Sᵢₙ₂) gleich dem Berührungssignal (S_{touch}) sind, und
wobei, wenn sich der Entkopplungs-Block (34) in dem zweiten Betriebszustand befindet, das erste Steuerungs-Eingangssignal (Sᵢₙ₁) gleich dem analogen Mustersignal (Sₚₐₜₜₑᵣₙ, ₐₙ) und das zweite Steuerungs-Eingangssignal (Sᵢₙ₂) gleich dem Berührungssignal (S_{touch}) ist, und
wobei, wenn sich der Entkopplungs-Block (34) in dem dritten Betriebszustand befindet, das zweite Steuerungs-Eingangssignal (Sᵢₙ₂) gleich dem analogen Mustersignal (Sₚₐₜₜₑᵣₙ, ₐₙ) und das erste Steuerungs-Eingangssignal (Sᵢₙ₁) gleich dem Berührungssignal (S_{touch}) ist.

8. Gruppe nach einem der vorhergehenden Ansprüche, wobei das zu erwartende Mustersignal durch die Steuereinheit (32) basierend auf dem Testsignal (Sₜₑₛₜ) berechnet wird, oder aus einem vorbestimmten Datensatz ausgewählt wird, der in der Steuereinheit (32) gespeichert ist und eine Mehrzahl von Testsignalen (Sₜₑₛₜ) und die zugeordneten zu erwartenden Mustersignale aufweist.

9. Gruppe nach einem der vorhergehenden Ansprüche, wobei die Berührungsbildschirmanzeige (10) weiterhin umfasst:
- einen Rahmen (11), der einen Innenraum der Berührungsbildschirmanzeige (10) definiert und der eine Öffnung (18) aufweist, wobei der Berührungssensor (14) in dem Innenraum des Rahmens (11) aufgenommen ist, sich an der Öffnung (18) erstreckt und die Anzeigeoberfläche (20) und eine weitere Oberfläche gegenüberliegend der Anzeigeoberfläche (20), die dem Innenraum zugewandt ist, aufweist;
- ein Anzeigefeld (13), das in dem Innenraum des Rahmens (11) aufgenommen ist, das der weiteren Oberfläche des Berührungssensors (14) zugewandt ist, und das dazu eingerichtet ist, graphische Bilder an der Anzeigeoberfläche (20) anzuzeigen,
- wobei der Entkopplungs-Block (34), die erste Berührungsbildschirm-Steuerung (36) und die zweite Berührungsbildschirm-Steuerung (38) weiterhin in dem Innenraum des Rahmens (11) aufgenommen sind.

10. Gruppe nach einem der vorhergehenden Ansprüche, wobei der Berührungssensor (14) auf einer der folgenden Berührungssensor-Technologien beruht: resistiv; kapazitiv; akustische Oberflächenwelle; optische Bildgebung.

11. Fahrzeug (30) mit einer Gruppe (30') nach einem der Ansprüche 1-10.

12. Fahrzeug nach Anspruch 11, wobei das Fahrzeug (30) ein Schwerfahrzeug oder ein Nutzfahrzeug ist.

13. Fahrzeug nach Anspruch 11 oder 12, wobei die Steuereinheit (32) eine Fahrzeug-Steuereinheit, VCU, ist.

14. Fahrzeug nach Anspruch 4 und einem der Ansprüche 11-13, wobei das Fahrzeug (30) von der Gruppe (30') durch das erste Anweisungssignal, das zweite Anweisungssignal, und das dritte Anweisungssignal gesteuert wird.

15. Verfahren zum Testen einer Berührungsbildschirmanzeige (10), die mit einer Steuereinheit (32) in Wirkverbindung steht,
wobei die Berührungsbildschirmanzeige (10) durch einen Bediener betätigbar ist und Folgendes umfasst:
- eine Anzeigeoberfläche (20);
- einen Berührungssensor (14);
- einen Entkopplungs-Block (34), der zwischen dem Berührungssensor (14) und der Steuereinheit (32) angeschlossen ist;
- eine erste Berührungsbildschirm-Steuerung (36), die zwischen dem Entkopplungs-Block (34) und der Steuereinheit (32) angeschlossen ist;
- eine zweite Berührungsbildschirm-Steuerung (38), die zwischen dem Entkopplungs-Block (34) und der Steuereinheit (32) angeschlossen ist,
- wobei das Verfahren mindestens eine Iteration ausführt, wobei jede Iteration die folgenden Schritte aufweist:
- Erfassen, durch den Berührungssensor (14), einer Berührung, die durch den Bediener erfolgt, in einem Bereich der Anzeigeoberfläche (20);
- Erzeugen, durch den Berührungssensor (14), eines Berührungssignals (S_{touch}), das charakteristisch für diese Berührung ist und das ein analoges elektrisches Signal ist;
- wenn eine Testbedingung bestätigt wird, Erzeugen, durch die Steuereinheit (32), eines Testsignals (Sₜₑₛₜ), das ein digitales Mustersignal (S_{pattern, dig}) und ein Identifizierungssignal (S_{ID}) mit einem ersten Wert oder einem zweiten Wert aufweist, wobei das digitale Mustersignal (Sₚₐₜₜₑᵣₙ, _{dig}) charakteristisch für ein vorbestimmtes Signal ist, wobei der erste Wert der ersten Berührungsbildschirm-Steuerung (36) zugeordnet ist und der zweite Wert der zweiten Berührungsbildschirm-Steuerung (38) zugeordnet ist;
- Erhalten, von dem Entkopplungs-Block (34), des Berührungssignals (S_{touch}) von dem Berührungssensor (14) und des Testsignals (Sₜₑₛₜ), wenn es erzeugt wird, von der Steuereinheit (32);
- Erzeugen, durch den Entkopplungs-Block (34), eines ersten Steuerungs-Eingangssignals (Sᵢₙ₁), das ein analoges elektrisches Signal ist, und eines zweiten Steuerungs-Eingangssignals (Sᵢₙ₂), das ein analoges elektrisches Signal ist,
- wobei der Entkopplungs-Block (34) dazu eingerichtet ist, gemäß Folgendem zu arbeiten: einem ersten Betriebszustand, bei dem der Entkopplungs-Block (34) das Testsignal (Tₜₑₛₜ) nicht erhält und sowohl das erste Steuerungs-Eingangssignal (Sᵢₙ₁) als auch das zweite Steuerungs-Eingangssignal (Sᵢₙ₂) mit dem Berührungssignal (S_{touch}) korrelieren; einem zweiten Betriebszustand, bei dem der Entkopplungs-Block (34) das Testsignal (Sₜₑₛₜ) erhält und das Identifizierungssignal (S_{ID}) den ersten Wert hat und bei dem das erste Steuerungs-Eingangssignal (Sᵢₙ₁) mit dem digitalen Mustersignal (Sₚₐₜₜₑᵣₙ, _{dig}) korreliert und das zweite Steuerungs-Eingangssignal (Sᵢₙ₂) mit dem Berührungssignal (S_{touch}) korreliert; und einem dritten Betriebszustand, bei dem der Entkopplungs-Block (34) das Testsignal (Sₜₑₛₜ) erhält und das Identifizierungssignal (S_{ID}) den zweiten Wert hat, und bei dem das zweite Steuerungs-Eingangssignal (Sᵢₙ₂) mit dem digitalen Mustersignal (Sₚₐₜₜₑᵣₙ, _{dig}) korreliert und das erste Steuerungs-Eingangssignal (Sᵢₙ₁) mit dem Berührungssignal (S_{touch}) korreliert,
wobei jede Iteration weiterhin die folgenden Schritte umfasst:
- Erhalten, von der ersten Berührungsbildschirm-Steuerung (36), des ersten Steuerungs-Eingangssignals (Sᵢₙ₁) von dem Entkopplungs-Block (34);
- Erzeugen, durch die erste Berührungsbildschirm-Steuerung (36), eines ersten Steuerungs-Ausgangssignals (Sₒᵤₜ₁), das ein digitales elektrisches Signal ist, und das mit
dem ersten Steuerungs-Eingangssignal (Sᵢₙ₁) korreliert;
- Erhalten, von der zweiten Berührungsbildschirm-Steuerung (38), des zweiten Steuerungs-Eingangssignals (Sᵢₙ₂) von dem Entkopplungs-Block (34);
- Erzeugen, durch die zweite Berührungsbildschirm-Steuerung (38), eines zweiten Steuerungs-Ausgangssignals (Sₒᵤₜ₂), das ein digitales elektrisches Signal ist, und das mit dem zweiten Steuerungs-Eingangssignal (Sᵢₙ₂) korreliert;
- Erhalten, von der Steuereinheit (32), des ersten Steuerungs-Ausgangssignals (Sₒᵤₜ₁) von der ersten Berührungsbildschirm-Steuerung (36) und des zweiten Steuerungs-Ausgangssignals (Sₒᵤₜ₂) von der zweiten Berührungsbildschirm-Steuerung (38); und
- wenn sich der Entkopplungs-Block (34) in dem ersten Betriebszustand befindet, Erzeugen, durch die Steuereinheit (32), eines ersten Fehlersignals, wenn das erste Steuerungs-Ausgangssignal (Sₒᵤₜ₁) und das zweite Steuerungs-Ausgangssignal (Sₒᵤₜ₂) eine erste gegenseitige Beziehung nicht erfüllen, oder
- wenn sich der Entkopplungs-Block (34) in dem zweiten Betriebszustand befindet, Erzeugen, durch die Steuereinheit (32), eines zweiten Fehlersignals, wenn das erste Steuerungs-Ausgangssignal (Sₒᵤₜ₁) und ein zu erwartendes Mustersignal, das dem Testsignal (Sₜₑₛₜ) zugeordnet ist, eine zweite gegenseitige Beziehung nicht erfüllen, oder
- wenn sich der Entkopplungs-Block (34) in dem dritten Betriebszustand befindet, Erzeugen, durch die Steuereinheit (32), eines dritten Fehlersignals, wenn das zweite Steuerungs-Ausgangssignal (Sₒᵤₜ₂) und das zu erwartende Mustersignal eine dritte gegenseitige Beziehung nicht erfüllen, und
- wobei die Testbedingung bestätigt wird: nachdem eine erste vorbestimmte Anzahl von Iterationen erreicht wird, bei der sich der Entkopplungs-Block (34) kontinuierlich in dem ersten Betriebszustand befindet; und/oder nachdem eine zweite vorbestimmte Anzahl von Iterationen erreicht wird, bei der das erste Fehlersignal erzeugt wird.

16. Computerprogrammprodukt, das Anweisungen zum Testen einer Berührungsbildschirmanzeige (10) umfasst, die mit einer Steuereinheit (32) in Wirkverbindung steht, wobei die Berührungsbildschirmanzeige (10) durch einen Bediener betätigbar ist und Folgendes umfasst:
- eine Anzeigeoberfläche (20);
- einen Berührungssensor (14);
- einen Entkopplungs-Block (34), der zwischen dem Berührungssensor (14) und der Steuereinheit (32) angeschlossen ist;
- eine erste Berührungsbildschirm-Steuerung (36), die zwischen dem Entkopplungs-Block (34) und der Steuereinheit (32) angeschlossen ist;
- eine zweite Berührungsbildschirm-Steuerung (38), die zwischen dem Entkopplungs-Block (34) und der Steuereinheit (32) angeschlossen ist,
- wobei das Computerprogrammprodukt in ein computerlesbares Speichermedium geladen werden kann, das von der Steuereinheit (32) umfasst ist, oder mit der Berührungsbildschirmanzeige (10) und der Steuereinheit (32) in Wirkverbindung steht, wobei die Anweisungen die Berührungsbildschirmanzeige (10) und die Steuereinheit (32) dazu veranlassen, die Schritte gemäß dem Verfahren nach Anspruch 15 auszuführen.

## Revendications

1. Groupe (30') comprenant un écran tactile (10) et une unité de commande (32) couplée fonctionnellement à l'écran tactile (10) et configurée pour générer un signal d'essai (Sₜₑₛₜ),
l'écran tactile (10) étant actionnable par un utilisateur et comprenant :
- une surface d'affichage (20) ;
- un capteur tactile (14) configuré pour détecter un toucher, effectué par l'utilisateur, au niveau d'une zone de la surface d'affichage (20) et configuré pour générer un signal tactile (S_{touch}) qui est indicatif dudit toucher et qui correspond à un signal électrique analogique ;
- un bloc de découplage (34) raccordé entre le capteur tactile (14) et l'unité de commande (32) et configuré pour recevoir le signal tactile (S_{touch}) du capteur tactile (14) et le signal d'essai (Sₜₑₛₜ) de l'unité de commande (32), et configuré pour générer un signal d'entrée du premier dispositif de commande (Sᵢₙ₁) qui correspond à un signal électrique analogique et un signal d'entrée du second dispositif de commande (Sᵢₙ₂) qui correspond à un signal électrique analogique ;
- un premier dispositif de commande à écran tactile (36) raccordé entre le bloc de découplage (34) et l'unité de commande (32) et configuré pour recevoir le signal d'entrée du premier dispositif de commande (Sᵢₙ₁) du bloc de découplage (34) et configuré pour générer un signal de sortie du premier dispositif de commande (Sₒᵤₜ₁) corrélé au signal d'entrée du premier dispositif de commande (Sᵢₙ₁), le signal de sortie du premier dispositif de commande (Sₒᵤₜ₁) étant un signal électrique numérique ; et
- un second dispositif de commande à écran tactile (38) raccordé entre le bloc de découplage (34) et l'unité de commande (32) et configuré pour recevoir le signal d'entrée du second dispositif de commande (Sᵢₙ₂) du bloc de découplage (34) et configuré pour générer un signal de sortie du second dispositif de commande (Sₒᵤₜ₂) corrélé au signal d'entrée du second dispositif de commande (Sᵢₙ₂), le signal de sortie du second dispositif de commande (Sₒᵤₜ₂) étant un signal électrique numérique,
dans lequel l'unité de commande (32) est en outre configurée pour recevoir le signal de sortie du premier dispositif de commande (Sₒᵤₜ₁) et le signal de sortie du second dispositif de commande (Sₒᵤₜ₂),
dans lequel le signal d'essai (Sₜₑₛₜ) comprend un signal de modèle numérique (S_{pattern,dig}) et un signal d'identification (S_{ID}) ayant une première valeur ou une seconde valeur, le signal de modèle numérique (S_{pattern,dig}) étant indicatif d'un signal prédéfini, la première valeur étant associée au premier dispositif de commande à écran tactile (36) et la seconde valeur étant associée au second dispositif de commande à écran tactile (38),
dans lequel le bloc de découplage (34) est configuré pour fonctionner selon : un premier état de fonctionnement dans lequel le bloc de découplage (34) ne reçoit pas le signal d'essai (Sₜₑₛₜ), un deuxième état de fonctionnement dans lequel le bloc de découplage (34) reçoit le signal d'essai (Sₜₑₛₜ) et le signal d'identification (S_{ID}) correspond à la première valeur, et un troisième état de fonctionnement dans lequel le bloc de découplage (34) reçoit le signal d'essai (Sₜₑₛₜ) et le signal d'identification (S_{ID}) correspond à la seconde valeur,
dans lequel lorsque le bloc de découplage (34) est dans le premier état de fonctionnement, le signal d'entrée du premier dispositif de commande (Sᵢₙ₁) et le signal d'entrée du second dispositif de commande (Sᵢₙ₂) sont en corrélation avec le signal tactile (S_{touch}) et l'unité de commande (32) génère un premier signal d'erreur si le signal de sortie du premier dispositif de commande (Sₒᵤₜ₁) et le signal de sortie du second dispositif de commande (Sₒᵤₜ₂) ne satisfont pas à une première relation mutuelle,
dans lequel lorsque le bloc de découplage (34) est dans le deuxième état de fonctionnement, le signal d'entrée du premier dispositif de commande (Sᵢₙ₁) est en corrélation avec le signal de modèle numérique (S_{pattern,dig}), le signal d'entrée du second dispositif de commande (Sᵢₙ₂) est en corrélation avec le signal tactile (S_{touch}) et l'unité de commande (32) génère un deuxième signal d'erreur si le signal de sortie du premier dispositif de commande (Sₒᵤₜ₁) et un signal de modèle attendu associé au signal d'essai (Sₜₑₛₜ) ne satisfont pas à une deuxième relation mutuelle, et
dans lequel lorsque le bloc de découplage (34) est dans le troisième état de fonctionnement, le signal d'entrée du second dispositif de commande (Sᵢₙ₂) est en corrélation avec le signal de modèle numérique (S_{pattern,dig}), le signal d'entrée du premier dispositif de commande (Sᵢₙ₁) est en corrélation avec le signal tactile (S_{touch}) et l'unité de commande (32) génère un troisième signal d'erreur si le signal de sortie du second dispositif de commande (Sₒᵤₜ₂) et le signal de modèle attendu ne satisfont pas à une troisième relation mutuelle.

2. Groupe selon la revendication 1, dans lequel le signal de sortie du premier dispositif de commande (Sₒᵤₜ₁) et le signal de sortie du second dispositif de commande (Sₒᵤₜ₂) ne satisfont pas à la première relation mutuelle si le signal de sortie du premier dispositif de commande (Sₒᵤₜ₁) et le signal de sortie du second dispositif de commande (Sₒᵤₜ₂) ont des valeurs respectives différentes l'une de l'autre,
dans lequel le signal de sortie du premier dispositif de commande (Sₒᵤₜ₁) et le signal de modèle attendu ne satisfont pas à la deuxième relation mutuelle si le signal de sortie du premier dispositif de commande (Sₒᵤₜ₁) et le signal de modèle attendu ont des valeurs respectives différentes l'une de l'autre,
dans lequel le signal de sortie du second dispositif de commande (Sₒᵤₜ₂) et le signal de modèle attendu ne satisfont pas à la troisième relation mutuelle si le signal de sortie du second dispositif de commande (Sₒᵤₜ₂) et le signal de modèle attendu ont des valeurs respectives différentes l'une de l'autre.

3. Groupe selon la revendication 1, dans lequel le signal de sortie du premier dispositif de commande (Sₒᵤₜ₁) et le signal de sortie du second dispositif de commande (Sₒᵤₜ₂) ne satisfont pas à la première relation si une première différence entre le signal de sortie du premier dispositif de commande (Sₒᵤₜ₁) et le signal de sortie du second dispositif de commande (Sₒᵤₜ₂) est supérieure à une première différence de seuil,
dans lequel le signal de sortie du premier dispositif de commande (Sₒᵤₜ₁) et le signal de modèle attendu ne satisfont pas à la deuxième relation mutuelle si une deuxième différence entre le signal de sortie du premier dispositif de commande (Sₒᵤₜ₁) et le signal de modèle attendu est supérieure à une deuxième différence de seuil,
dans lequel le signal de sortie du second dispositif de commande (Sₒᵤₜ₂) et le signal de modèle attendu ne satisfont pas à la troisième relation mutuelle si une troisième différence entre le signal de sortie du second dispositif de commande (Sₒᵤₜ₂) et le signal de modèle attendu est supérieure à une troisième différence de seuil.

4. Groupe selon l'une quelconque des revendications précédentes, dans lequel lorsque le bloc de découplage (34) est dans le premier état de fonctionnement et si le signal de sortie du premier dispositif de commande (Sₒᵤₜ₁) et le signal de sortie du second dispositif de commande (Sₒᵤₜ₂) satisfont à la première relation mutuelle, l'unité de commande (32) est configurée pour générer un premier signal de commande en corrélation avec le signal de sortie du premier dispositif de commande (Sₒᵤₜ₁) et/ou sur le signal de sortie du second dispositif de commande (Sₒᵤₜ₂),
dans lequel lorsque le bloc de découplage (34) est dans le deuxième état de fonctionnement, l'unité de commande (32) est configurée pour générer un deuxième signal de commande en corrélation avec le signal de sortie du second dispositif de commande (Sₒᵤₜ₂), et
dans lequel lorsque le bloc de découplage (34) est dans le troisième état de fonctionnement, l'unité de commande (32) est configurée pour générer un troisième signal de commande en corrélation avec le signal de sortie du premier dispositif de commande (Sₒᵤₜ₁).

5. Groupe selon l'une quelconque des revendications précédentes, dans lequel le bloc de découplage (34) comprend :
- un bloc démultiplexeur (40 ; 40, 42) relié à l'unité de commande (32) et configuré pour recevoir le signal d'essai (Sₜₑₛₜ) de l'unité de commande (32) et pour extraire le signal de modèle numérique (S_{pattern,dig}) et le signal d'identification (S_{ID}) du signal d'essai (Sₜₑₛₜ), le signal de modèle numérique (S_{pattern,dig}) et le signal d'identification (S_{ID}) étant des signaux électriques numériques respectifs ;
- un convertisseur numérique-analogique, CNA, (44) raccordé au bloc démultiplexeur (40 ; 40, 42) et configuré pour recevoir le signal de modèle numérique (S_{pattern,dig}) du bloc démultiplexeur (40 ; 40, 42) et convertir le signal de modèle numérique (S_{pattern,dig}) en un signal de modèle analogique (S_{pattern,an}), le signal de modèle analogique (S_{pattern,an}) étant un signal électrique analogique indicatif dudit signal prédéfini ; et
- un bloc de commutation (50) raccordé au CNA (44), au capteur tactile (14), au bloc démultiplexeur (40 ; 40, 42), au premier dispositif de commande à écran tactile (36) et au second dispositif de commande à écran tactile (38), et configuré pour recevoir le signal de modèle analogique (S_{pattern,an}) du CNA (44), le signal tactile (S_{touch}) du capteur tactile (14) et le signal d'identification (S_{ID}) du bloc démultiplexeur (40 ; 40, 42), et pour générer le signal d'entrée du premier dispositif de commande (Sᵢₙ₁) et le signal d'entrée du second dispositif de commande (Sᵢₙ₂).

6. Groupe selon la revendication 5, dans lequel le bloc de commutation (50) comprend un premier élément de commutation (52) et un second élément de commutation (54),
dans lequel le premier élément de commutation (52) est raccordé au premier dispositif de commande à écran tactile (36), est dans une première position respective (52a) et passe de la première position respective (52a) à une seconde position respective (52b) dès réception du signal d'identification (S_{ID}) ayant la première valeur, le premier élément de commutation (52) raccordant le capteur tactile (14) au premier dispositif de commande à écran tactile (36) lorsqu'il est réglé dans la première position respective (52a) et raccordant le CNA (44) au premier dispositif de commande à écran tactile (36) lorsqu'il est réglé dans la seconde position respective (52b), et
dans lequel le second élément de commutation (54) est raccordé au second dispositif de commande à écran tactile (38), est dans une première position respective (54a) et passe de la première position respective (54a) à une seconde position respective (54b) dès réception du signal d'identification (S_{ID}) ayant la seconde valeur, le second élément de commutation (54) raccordant le capteur tactile (14) au second dispositif de commande à écran tactile (38) lorsqu'il est réglé dans la première position respective (54a) et raccordant le CNA (44) au second dispositif de commande à écran tactile (38) lorsqu'il est réglé dans la seconde position respective (54b).

7. Groupe selon la revendication 5 ou 6, dans lequel lorsque le bloc de découplage (34) est dans le premier état de fonctionnement, le signal d'entrée du premier dispositif de commande (Sᵢₙ₁) et le signal d'entrée du second dispositif de commande (Sᵢₙ₂) sont égaux au signal tactile (S_{touch}),
dans lequel lorsque le bloc de découplage (34) est dans le deuxième état de fonctionnement, le signal d'entrée du premier dispositif de commande (Sᵢₙ₁) est égal au signal de modèle analogique (S_{pattern,an}) et le signal d'entrée du second dispositif de commande (Sᵢₙ₂) est égal au signal tactile (S_{touch}) et
dans lequel lorsque le bloc de découplage (34) est dans le troisième état de fonctionnement, le signal d'entrée du second dispositif de commande (Sᵢₙ₂) est égal au signal de modèle analogique (S_{pattern,an}) et le signal d'entrée du premier dispositif de commande (Sᵢₙ₁) est égal au signal tactile (S_{touch}).

8. Groupe selon l'une quelconque des revendications précédentes, dans lequel le signal de modèle attendu est calculé par l'unité de commande (32) en fonction du signal d'essai (Sₜₑₛₜ), ou est sélectionné parmi un ensemble de données prédéterminé stocké dans l'unité de commande (32) et comprenant une pluralité de signaux d'essai (Sₜₑₛₜ) et les signaux de modèle attendu associés.

9. Groupe selon l'une quelconque des revendications précédentes, dans lequel l'écran tactile (10) comprend en outre :
- un cadre (11) définissant un espace interne de l'écran tactile (10) et présentant une ouverture (18), dans lequel le capteur tactile (14) est logé dans l'espace interne du cadre (11), s'étend au niveau de l'ouverture (18) et dispose de la surface d'affichage (20) et d'une surface supplémentaire opposée à la surface d'affichage (20) et tournée vers l'espace interne ;
- un panneau d'affichage (13) qui est logé dans l'espace interne du cadre (11), fait face à la surface supplémentaire du capteur tactile (14) et est configuré pour afficher des images graphiques sur la surface d'affichage (20),
dans lequel le bloc de découplage (34), le premier dispositif de commande à écran tactile (36) et le second dispositif de commande à écran tactile (38) sont en outre logés dans l'espace interne du cadre (11).

10. Groupe selon l'une quelconque des revendications précédentes, dans lequel le capteur tactile (14) repose sur l'une des techniques de détection tactile suivantes : résistive ; capacitive ; onde acoustique de surface ; imagerie optique.

11. Véhicule (30) comprenant un groupe (30') selon l'une quelconque des revendications 1 à 10.

12. Véhicule selon la revendication 11, dans lequel le véhicule (30) est un véhicule lourd ou un véhicule de travail.

13. Véhicule selon la revendication 11 ou la revendication 12, dans lequel l'unité de commande (32) est une unité de commande de véhicule, UCV.

14. Véhicule selon la revendication 4 et l'une quelconque des revendications 11 à 13, dans lequel le véhicule (30) est commandé par le groupe (30') par le biais du premier signal de commande, le deuxième signal de commande et le troisième signal de commande.

15. Procédé d'essai d'un écran tactile (10) couplé fonctionnellement à une unité de commande (32),
l'écran tactile (10) étant actionnable par un utilisateur et comprenant :
- une surface d'affichage (20) ;
- un capteur tactile (14) ;
- un bloc de découplage (34) raccordé entre le capteur tactile (14) et l'unité de commande (32) ;
- un premier dispositif de commande à écran tactile (36) raccordé entre le bloc de découplage (34) et l'unité de commande (32) ;
- un second dispositif de commande à écran tactile (38) raccordé entre le bloc de découplage (34) et l'unité de commande (32),
le procédé comprenant l'exécution d'au moins une itération, chaque itération comprenant les étapes suivantes :
- détecter, à l'aide du capteur tactile (14), un toucher, effectué par l'utilisateur, au niveau d'une zone de la surface d'affichage (20) ;
- générer, à l'aide du capteur tactile (14), un signal tactile (S_{touch}) qui est indicatif dudit toucher et qui correspond à un signal électrique analogique ;
- si une condition d'essai est confirmée, générer, par l'unité de commande (32), un signal d'essai (Sₜₑₛₜ) comprenant un signal de modèle numérique (S_{pattern,dig}) et un signal d'identification (S_{ID}) ayant une première valeur ou une seconde valeur, le signal de modèle numérique (S_{pattern,dig}) étant indicatif d'un signal prédéfini, la première valeur étant associée au premier dispositif de commande à écran tactile (36) et la seconde valeur étant associée au second dispositif de commande à écran tactile (38) ;
- recevoir, par le biais du bloc de découplage (34), le signal tactile (S_{touch}) en provenance du capteur tactile (14) et le signal d'essai (Sₜₑₛₜ), s'il est généré, en provenance de l'unité de commande (32) ;
- générer, à l'aide du bloc de découplage (34), un signal d'entrée du premier dispositif de commande (Sᵢₙ₁) qui correspond à un signal électrique analogique, et un signal d'entrée du second dispositif de commande (Sᵢₙ₂) qui correspond à un signal électrique analogique,
dans lequel le bloc de découplage (34) est configuré pour fonctionner selon : un premier état de fonctionnement dans lequel le bloc de découplage (34) ne reçoit pas le signal d'essai (Sₜₑₛₜ) et à la fois le signal d'entrée du premier dispositif de commande (Sᵢₙ₁) et le signal d'entrée du second dispositif de commande (Sᵢₙ₂) sont en corrélation avec le signal tactile (S_{touch}) ; un deuxième état de fonctionnement dans lequel le bloc de découplage (34) reçoit le signal d'essai (Sₜₑₛₜ) et le signal d'identification (S_{ID}) correspond à la première valeur, et le signal d'entrée du premier dispositif de commande (Sᵢₙ₁) est en corrélation avec le signal de modèle numérique (S_{pattern,dig}) et le signal d'entrée du second dispositif de commande (Sᵢₙ₂) est en corrélation avec le signal tactile (S_{touch}) ; et un troisième état de fonctionnement dans lequel le bloc de découplage (34) reçoit le signal d'essai (Sₜₑₛₜ) et le signal d'identification (S_{ID}) correspond à la seconde valeur, et le signal d'entrée du second dispositif de commande (Sᵢₙ₂) est en corrélation avec le signal de modèle numérique (S_{pattern,dig}) et le signal d'entrée du premier dispositif de commande (Sᵢₙ₁) est en corrélation avec le signal tactile (S_{touch}),
chaque itération comprenant en outre les étapes suivantes :
- recevoir, par le biais du premier dispositif de commande à écran tactile (36), le signal d'entrée du premier dispositif de commande (Sᵢₙ₁) en provenance du bloc de découplage (34) ;
- générer, à l'aide du premier dispositif de commande à écran tactile (36), un signal de sortie du premier dispositif de commande (Sₒᵤₜ₁) qui correspond à un signal électrique numérique et qui est en corrélation avec le signal d'entrée du premier dispositif de commande (Sᵢₙ₁) ;
- recevoir, par le biais du second dispositif de commande à écran tactile (38), le signal d'entrée du second dispositif de commande (Sᵢₙ₂) en provenance du bloc de découplage (34) ;
- générer, à l'aide du second dispositif de commande à écran tactile (38), un signal de sortie du second dispositif de commande (Sₒᵤₜ₂) qui correspond à un signal électrique numérique et qui est en corrélation avec le signal d'entrée du second dispositif de commande (Sᵢₙ₂) ;
- recevoir, par le biais de l'unité de commande (32), le signal de sortie du premier dispositif de commande (Sₒᵤₜ₁) en provenance du premier dispositif de commande à écran tactile (36) et le signal de sortie du second dispositif de commande (Sₒᵤₜ₂) en provenance du second dispositif de commande à écran tactile (38) ; et
- lorsque le bloc de découplage (34) est dans le premier état de fonctionnement, générer, à l'aide de l'unité de commande (32), un premier signal d'erreur si le signal de sortie du premier dispositif de commande (Sₒᵤₜ₁) et le signal de sortie du second dispositif de commande (Sₒᵤₜ₂) ne satisfont pas à une première relation mutuelle, ou
lorsque le bloc de découplage (34) est dans le deuxième état de fonctionnement, générer, à l'aide de l'unité de commande (32), un deuxième signal d'erreur si le signal de sortie du premier dispositif de commande (Sₒᵤₜ₁) et un signal de modèle attendu associé au signal d'essai (Sₜₑₛₜ) ne satisfont pas à une deuxième relation mutuelle, ou
lorsque le bloc de découplage (34) est dans le premier état de fonctionnement, générer, à l'aide de l'unité de commande (32), un troisième signal d'erreur si le signal de sortie du second dispositif de commande (Sₒᵤₜ₂) et le signal de modèle attendu ne satisfont pas à une troisième relation mutuelle, et
dans lequel la condition d'essai est confirmée : lorsqu'est atteint un premier nombre prédéfini d'itérations dans lesquelles le bloc de découplage (34) est placé en continu dans le premier état de fonctionnement ; et/ou lorsqu'est atteint un second nombre prédéfini d'itérations dans lesquelles le premier signal d'erreur est généré.

16. Produit reposant sur un programme informatique comprenant des instructions pour l'essai d'un écran tactile (10) couplé fonctionnellement à une unité de commande (32),
l'écran tactile (10) étant actionnable par un utilisateur et comprenant :
- une surface d'affichage (20) ;
- un capteur tactile (14) ;
- un bloc de découplage (34) raccordé entre le capteur tactile (14) et l'unité de commande (32) ;
- un premier dispositif de commande à écran tactile (36) raccordé entre le bloc de découplage (34) et l'unité de commande (32) ;
- un second dispositif de commande à écran tactile (38) raccordé entre le bloc de découplage (34) et l'unité de commande (32),
dans lequel le produit reposant sur un programme informatique peut être chargé dans un support de stockage lisible par ordinateur, compris dans l'unité de commande (32) ou couplé fonctionnellement à l'écran tactile (10) et à l'unité de commande (32), dans lequel les instructions entraînent l'écran tactile (10) et l'unité de commande (32) à exécuter les étapes du procédé selon la revendication 15.
